# FASCICULE DE BREVET EUROPEEN

(11) **EP 3 561 968 B1**
(45) Date de publication et mention de la délivrance du brevet: **09.09.2020**
(21) Numéro de dépôt: 19158464.8
(22) Date de dépôt: 21.02.2019
(51) Int. Cl.: H01R 25/16, H02B 11/26, H01R 4/56, H01F 27/04, H02G 5/02, H02B 13/035

(54) **SYSTÈME DE RACCORDEMENT ÉLECTRIQUE POUR TRANSFORMATEUR DE TENSION**
ELEKTRISCHES ANSCHLUSSSYSTEM FÜR EINEN SPANNUNGSWANDLER
ELECTRICAL CONNECTION SYSTEM FOR A VOLTAGE TRANSFORMER

(30) Priorité: 26.04.2018 FR 1853642
(43) Date de publication de la demande: 30.10.2019
(73) Titulaire: Schneider Electric Industries SAS, 92500 Rueil Malmaison (FR)
(72) Inventeur: PERRONE, Michel, 38000 Grenoble (FR); MEDJADJ, Geoffrey, 38100 Grenoble (FR); COEHLO, Pascal, 38850 Chirens (FR); GASTALDI, Dominique, 38870 Saint-Pierre de Bressieux (FR); BALME, Hubert, 38950 Saint Martin Le Vinoux (FR); MERLIN, Stéphane, 38420 Le Versoud (FR); SAKER, Abdou, 38000 Grenoble (FR)
(74) Mandataire: Dufresne, Thierry

(56) Documents cités:
- CN-U- 202 872 241
- DE-A1- 4 233 986
- DE-A1- 19 540 493
- FR-A1- 2 757 688
- JP-A- 2010 272 446

## Description

### Domaine technique de l'invention

L'invention concerne le raccordement d'un transformateur de tension à un jeu de barres métalliques conductrices alimentées par un réseau électrique haute tension, au sein d'une cellule d'appareillage électrique haute tension. Dans le présent document, le terme "haute tension" couvre le domaine de la moyenne tension et de la haute tension, c'est-à-dire relatif à une alimentation du réseau électrique d'une tension supérieure à 1000V. La cellule d'appareillage électrique haute tension peut indifféremment comporter un appareillage modulaire à isolement dans l'air (AIS - Air Insulated Switchgear) ou dans le gaz (GIS - Gas Insulated Switchgear) ou toute autre appareillage haute tension.

Les transformateurs de tension, appelés aussi transformateurs de potentiel ou TP, sont fréquemment utilisés dans le domaine de la haute tension pour effectuer des mesures de tension entre deux phases, pour faire du comptage d'énergie et/ou pour pouvoir alimenter en basse tension divers produits auxiliaires au sein d'une cellule.

Les transformateurs de tension sont généralement raccordés en dérivation entre deux phases et ont donc une consommation de courant très réduite par rapport au courant circulant dans les jeux de barres conductrices de la cellule. Ils sont généralement localisés dans un des compartiments de la cellule, comme par exemple dans un compartiment "transformateurs et câbles" ou dans un compartiment "jeux de barres" qui comporte les barres conductrices métalliques du réseau électrique haute tension. Leurs moyens de raccordement au réseau électrique sont de ce fait traversés par un courant faible, typiquement de l'ordre de quelques ampères seulement.

Or, la tendance est parfois à proposer des cellules de dimensions plus réduites pour gagner en encombrement, ce qui conduit à devoir rapprocher les uns des autres appareils et équipements à l'intérieur de ces cellules. Cela entraîne donc un renforcement du champ électrique ambiant et des contraintes diélectriques, notamment pour le raccordement d'un transformateur de tension avec un jeu de barres ou un circuit puissance de la cellule.

### Etat de la technique

Une solution de raccordement classique consiste à utiliser des conducteurs souples, tels que des conducteurs filaires basse tension ou des câbles isolés moyenne tension entre le transformateur de tension et les jeux de barres, ces câbles étant raccordés à leurs extrémités par des cosses fixées par vissage par exemple.

Ce type de raccordement ne permet cependant pas toujours de garantir un positionnement fixe et précis des câbles dans l'espace. En effet, il existe une variabilité de la position des câbles souples dans le volume et une perforation possible de l'isolant des câbles en cas de proximité avec une masse métallique lors de vibrations, d'une mauvaise mise en place ou lors de courts-circuits. De plus, la faible épaisseur de la cosse d'un câble qui est vissée au jeu de barres présente aussi un risque lors de courts-circuits. En effet, la cosse peut alors fondre ou se détériorer dans l'empilage du jeu de barres et, de ce fait, celui-ci n'est plus serré de façon satisfaisante, ce qui peut entraîner une perte de contact et donc une perte de la fonctionnalité de mesure de tension, voire un endommagement de la cellule, par exemple un défaut interne de la cellule de type un arc interne.

Une autre solution consisterait en une connexion rigide, à l'aide par exemple d'une petite barre conductrice fixée entre le transformateur de tension et les jeux de barres. Cependant, comme le champ électrique d'un transformateur de tension est très important en surface au voisinage de ses raccordements externes et de ses bobinages primaires, l'utilisation d'une connexion rigide raccordée en parallèle de la surface supérieure du transformateur de tension au-dessus des bobinages primaires favorise de façon importante le cheminement en surface et les amorçages diélectriques vers les tôles du compartiment dans lequel est logé le transformateur de tension. D'où une perte des performances diélectriques pouvant induire l'apparition d'un défaut interne. Les documents JP2010272446 et FR2757688 décrivent déjà des connexions rigides.

L'invention a donc pour but de concevoir un système de raccordement simple, économique ne présentant pas les inconvénients cités ci-dessus. Les objectifs principaux de l'invention sont :
- Vis-à-vis d'une solution de connexion souple (câble souple), assurer la tenue diélectrique du système en maîtrisant mieux la localisation du conducteur vis-à-vis des masses,
- Vis-à-vis d'une solution de connexion rigide (barre rigide), assurer la tenue diélectrique du système en évitant la zone de champ électrique maximum à la surface externe du transformateur de tension lorsqu'un conducteur rigide longe au moins partiellement la surface externe du transformateur de tension à fortes contraintes diélectriques,

- Proposer une solution réglable qui autorise et compense les écarts entre les positionnements relatifs du transformateur et des jeux de barres, sans dégrader ni la tenue mécanique, ni la connexion électrique,
- Dissocier la fonction de serrage des jeux de barres du circuit principal haute tension et la fonction de connexion par piquage vers le transformateur de tension. Comme le raccordement vers le transformateur de tension est indépendant et non pas pris en sandwich dans le serrage du circuit principal, ceci évite les risques de dégradation, voire de fusion, du système de raccordement, notamment lors d'un court-circuit dans le circuit principal.
- Pouvoir serrer à un couple déterminé l'ensemble du jeu de barres indépendamment des éléments du système de raccordement, ce qui permet de garantir l'intégrité du jeu de barres.

### Exposé de l'invention

Ce but est atteint par un système de raccordement électrique pour raccorder un transformateur de tension avec une barre conductrice haute tension, le système comportant un conducteur de dérivation destiné à connecter un premier point de raccordement au niveau du transformateur de tension avec un second point de raccordement au niveau de la barre conductrice, le transformateur de tension comportant un connecteur interne s'étendant selon un axe interne perpendiculaire à un plan de surface du transformateur de tension.

Selon l'invention, le système de raccordement comprend une première vis de raccordement qui est destinée à être fixée au premier point de raccordement dans le prolongement de l'axe interne du transformateur de tension, un premier manchon métallique fileté qui relie le conducteur de dérivation à la première vis de raccordement selon l'axe interne et qui permet d'ajuster la position du conducteur de dérivation par rapport à la première vis de raccordement, et comprend une seconde vis de raccordement qui est destinée à être fixée au second point de raccordement perpendiculairement à la barre conductrice.

Selon une caractéristique, le système de raccordement comprend un second manchon métallique fileté reliant le conducteur de dérivation à la seconde vis de raccordement et permettant d'ajuster la position du conducteur de dérivation par rapport à la seconde vis de raccordement.

Selon une autre caractéristique, le système de raccordement comporte également un premier déflecteur diélectrique entourant la première vis de raccordement et un second déflecteur diélectrique entourant la seconde vis de raccordement.

Selon une autre caractéristique, le conducteur de dérivation comporte une ou plusieurs courbures entre le premier manchon et le second manchon, et est recouvert d'un isolant.

L'invention concerne également un cellule d'appareillage électrique comprenant un transformateur de tension, au moins une barre conductrice haute tension, et un système de raccordement électrique comme décrit ci-dessus.

Selon une caractéristique, la cellule d'appareillage comporte un premier système de raccordement pour raccorder une première borne du transformateur de tension avec une première barre conductrice et un deuxième système de raccordement similaire pour raccorder une deuxième borne du transformateur de tension avec une deuxième barre conductrice.

### Description détaillée

D'autres caractéristiques vont apparaître dans la description détaillée qui suit faite en regard des dessins annexés dans lesquels :
- la figure 1 est une vue simplifiée du système de raccordement selon l'invention, utilisé entre un transformateur de tension et des barres conductrices au sein d'une cellule d'appareillage haute tension,
- la figure 2 présente une vue éclatée de différentes pièces du système de raccordement,
- les figures 3 et 4 sont respectivement des vues en coupe du point de raccordement du système de raccordement au niveau du transformateur de tension, respectivement d'une barre haute tension.

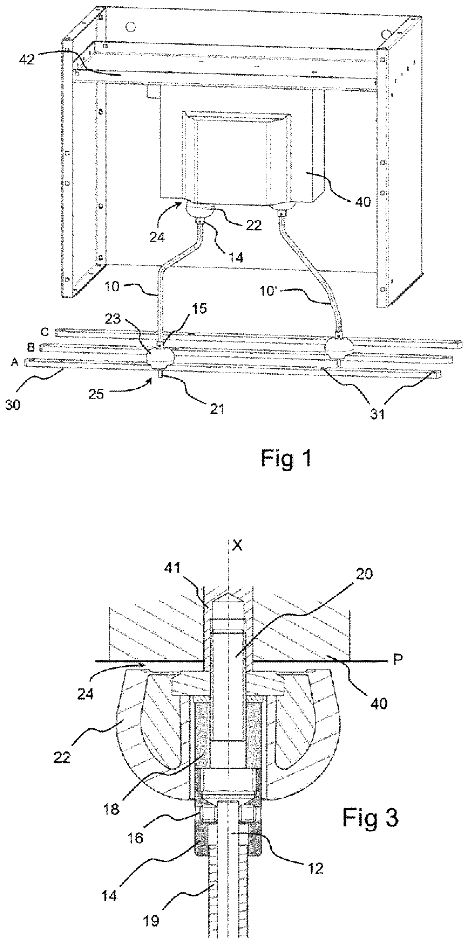

La figure 1 montre une partie d'une cellule d'appareillage électrique alimentée par un réseau électrique triphasé haute tension dans laquelle on voit un jeu de barres 30 du réseau électrique triphasé A, B, C et un transformateur de tension 40 qui est logé dans une structure métallique 42 de la cellule d'appareillage. De façon classique, cette cellule d'appareillage comporte aussi un appareil électrique haute tension par exemple du type interrupteur, disjoncteur, sectionneur ou autres, qui est raccordé au jeu de barres du réseau électrique triphasé, mais qui n'est pas représenté sur la figure 1 par souci de simplification.

Comme indiqué précédemment, un tel transformateur de tension 40 peut avoir pour fonction d'effectuer des mesures de tension entre deux phases du réseau électrique, de faire du comptage de l'énergie circulant dans le réseau électrique et/ou d'alimenter divers produits auxiliaires au sein de la cellule. Le transformateur de tension 40 est électriquement raccordé en dérivation du jeu de barres 30, par exemple entre deux phases A, B du réseau électrique, à l'aide d'au moins un système de raccordement 10.

Sur la figure 1, la cellule comporte ainsi un premier système de raccordement 10 pour connecter une première borne du transformateur de tension 40 à une première barre conductrice, par exemple la barre 30A correspondant à la phase A, au niveau d'un premier point de raccordement 24, et comporte aussi un deuxième système de raccordement 10', similaire au premier système de raccordement 10, pour connecter une deuxième borne du transformateur de tension 40 à une deuxième barre conductrice, par exemple la barre 30B correspondant à la phase B.

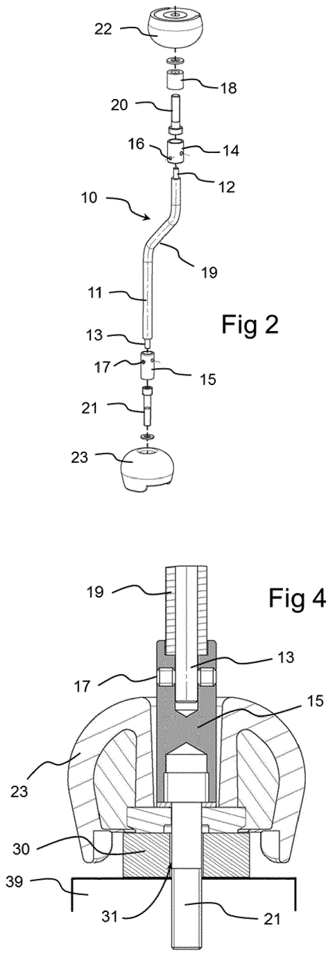

La vue éclatée de la figure 2 montre des éléments du système de raccordement 10. Le système de raccordement 10 comporte un conducteur de dérivation 11 se terminant par une première extrémité 12 côté transformateur de tension et une seconde extrémité 13 côté jeu de barres. Le conducteur de dérivation 11 peut être un câble métallique classique suffisamment rigide pour ne pas se déformer aisément, par exemple de section 6 mm, qui peut être entouré d'une gaine isolante 19 et qui peut présenter une ou plusieurs courbures préformées pour s'adapter au positionnement relatif entre le transformateur et le jeu de barres dans la cellule, et au positionnement vis-à-vis des parties métalliques avoisinantes de la cellule qui sont à la masse.

Le système de raccordement 10 comporte une première vis de raccordement métallique 20 pour assurer la connexion mécanique et électrique du système de raccordement 10 avec un premier point de raccordement au niveau du transformateur de tension 40. Le système de raccordement 10 comporte également un premier manchon métallique 14 coopérant avec la première vis 20. Cette vis 20 comporte en effet deux filetages externes distincts, d'un côté un premier filetage servant à fixer la vis 20 au transformateur 40 et de l'autre côté un second filetage servant à raccorder et ajuster la vis 20 au premier manchon 14. Ainsi, le premier manchon 14 fileté relie le conducteur de dérivation 11 à la première vis de raccordement 20, de façon à pouvoir ajuster la position du conducteur de dérivation 11 par rapport à la première vis de raccordement 20.

La figure 3 détaille la connexion du système de raccordement 10 au transformateur de tension 40 au niveau du premier point de raccordement 24. Dans le mode de réalisation présenté, la première extrémité 12 du conducteur 11 comporte une partie dénudée sans gaine isolante qui vient s'insérer dans une extrémité du premier manchon 14. L'autre extrémité de ce premier manchon 14 comporte un filetage interne qui est complémentaire du filetage correspondant de la première vis de raccordement 20.

La fixation du conducteur 11 dans le premier manchon 14 est réalisée par exemple à l'aide d'une vis pointeau qui traverse une ouverture transversale 16 du premier manchon 14, de façon à serrer et coincer la première extrémité 12 à l'intérieur du premier manchon 14, de façon à assurer une bonne tenue mécanique et un bon contact électrique.

Le transformateur de tension 40 comporte un connecteur interne 41 qui s'étend selon un axe interne X longitudinal jusqu'au premier point de raccordement 24 et qui est relié électriquement à une extrémité d'un enroulement primaire du transformateur de tension 40. Cet axe interne X est sensiblement perpendiculaire à un plan P, correspondant au plan de surface externe du transformateur de tension 40 au niveau du premier point de raccordement 24. Selon l'invention, au premier point de raccordement 24, la première vis de raccordement 20 est préférentiellement vissée au connecteur interne 41 dans le prolongement de l'axe interne X longitudinal, ce qui permet de minimiser l'influence des champs électriques de surface présents au point de raccordement du transformateur de tension 40. Ainsi, comme indiqué dans les figures, le premier manchon 14 est fixé à la première vis de raccordement 20 dans le prolongement de l'axe interne X longitudinal et le conducteur de dérivation 11 est lui aussi fixé au premier manchon 14 dans le prolongement de l'axe interne X. Grâce à cela, l'influence des champs électriques est encore plus réduite car le conducteur de dérivation 11 est donc fixé à la première vis de raccordement 20 selon la direction de l'axe interne X, c'est-à-dire de façon sensiblement perpendiculaire par rapport au plan de surface externe du transformateur de tension 40.

Dans le mode de réalisation présenté, le système de raccordement 10 comporte en plus une entretoise 18 qui prend appui contre la tête de la première vis de raccordement 20 lorsque celle-ci est vissée au connecteur interne 41. Cette entretoise 18 optionnelle a pour but de faciliter le montage du système de raccordement 10, côté transformateur de tension. En effet, elle permet de moins enfoncer la tête de la vis 20 lorsque celle-ci est vissée au connecteur interne 41, en particulier lors de l'utilisation d'un déflecteur diélectrique. Cela permet ainsi de diminuer la taille du premier manchon 14, ce qui peut faciliter son positionnement avant de pouvoir le visser à la vis 20. Cela peut aussi éviter de dénuder sur une trop grande longueur l'extrémité 12 du conducteur 11, ce qui pourrait nuire à la tenue diélectrique.

Ainsi, la première vis de raccordement 20 est d'un côté vissée au transformateur de tension 40, avec éventuellement un couple de serrage prédéterminé, et de l'autre côté est fixée au premier manchon 14 de manière réglable en jouant sur le filetage interne du premier manchon 14 et le filetage externe de la vis 20, procurant ainsi une grande facilité pour ajuster la fixation du système de raccordement 10 et tenir compte ainsi des différences de cotes éventuelles dans le montage des appareils dans la cellule. Ces deux fonctions sont donc avantageusement dissociées et indépendantes, ce qui simplifie le montage du système de raccordement.

Comme la première vis de raccordement 20 est fixée perpendiculairement au plan P de surface du transformateur de tension 40, on évite ainsi avantageusement que le système de raccordement 10 longe la surface contrainte diélectriquement du transformateur de tension 40. De plus, pour diminuer encore plus ces contraintes diélectriques et mieux uniformiser les champs électriques en surface, le système de raccordement 10 comporte en option un premier déflecteur diélectrique 22 qui entoure au moins partiellement la première vis de raccordement 20, l'entretoise 18 et le premier manchon 14 au niveau du premier point de raccordement 24, en s'appuyant contre le transformateur de tension 40. De façon classique, un tel déflecteur diélectrique comporte par exemple un cœur métallique entouré d'une isolation en époxy ou en polyester.

Le système de raccordement 10 comporte également une seconde vis de raccordement métallique 21 pour assurer la connexion mécanique et électrique du système de raccordement 10 avec un second point de raccordement au niveau d'une des barres conductrices du jeu de barres 30. Selon un mode de réalisation, le système de raccordement 10 comporte également un second manchon métallique 15 coopérant avec la seconde vis 21. Cette vis 21 comporte un filetage externe distinct à chacune de ses deux extrémités. Cette vis 21 comporte en effet deux filetages externes distincts, d'un côté un premier filetage servant à fixer la vis 21 à la barre conductrice 30 et de l'autre côté un second filetage servant à raccorder et ajuster la vis 21 au second manchon 15. Ainsi, le second manchon 15 fileté relie le conducteur de dérivation 11 à la seconde vis de raccordement 21, de façon à pouvoir ajuster la position du conducteur de dérivation 11 par rapport à la seconde vis de raccordement 21.

La figure 4 détaille la connexion du système de raccordement 10 à la barre conductrice 30 au niveau du second point de raccordement 25. Dans le mode de réalisation présenté, la seconde extrémité 13 du conducteur 11 comporte une partie dénudée sans gaine isolante qui vient s'insérer dans une extrémité du second manchon 15. L'autre extrémité de ce second manchon 15 comporte un filetage interne qui est complémentaire du filetage externe correspondant de la seconde vis de raccordement 21.

La fixation du conducteur 11 dans le second manchon 15 est réalisée par exemple à l'aide d'une vis pointeau qui traverse une ouverture transversale 17 du second manchon 15, de façon à serrer et coincer la seconde extrémité 13 à l'intérieur du second manchon 15, de façon à assurer une bonne tenue mécanique et un bon contact électrique.

La barre conductrice 30 comporte au moins une ouverture traversante 31 capable d'accueillir la seconde vis de raccordement 21 pour former le second point de raccordement 25 du système de raccordement. Généralement, une barre 30 comporte une pluralité d'ouvertures 31 qui sont placées régulièrement le long de la barre, pour donner plus de facilité dans l'agencement de la cellule, car ces ouvertures peuvent servir pour fixer deux barres entre elles ou pour raccorder un appareil électrique 39 de la cellule haute tension, comme indiqué en figure 4.

Selon l'invention, au second point de raccordement 25, la seconde vis de raccordement 21 d'une part traverse perpendiculairement la barre haute tension et est vissée dans un connecteur d'un appareil électrique 39, avec éventuellement un couple de serrage prédéterminé, et d'autre part est fixée au second manchon 15 de manière réglable en jouant sur le filetage interne du second manchon 15 et le filetage externe de la vis 21, procurant ainsi une grande facilité pour ajuster la fixation du système de raccordement 10 et tenir compte des différences de cotes éventuelles dans le montage des appareils dans la cellule. Ces deux fonctions sont donc avantageusement dissociées et indépendantes, ce qui fait que le piquage effectué pour raccorder le transformateur de tension 40 ne modifie pas le couple de serrage qui permet de fixer la barre 30 contre l'appareil 39, ce qui ne serait pas le cas si on utilisait des cosses plaquées contre la barre 30 par exemple.

Vu que la seconde vis de raccordement 21, le second manchon métallique 15 et l'extrémité du conducteur de dérivation 11 (comme indiqué dans les figures) sont fixées perpendiculairement à la barre haute tension 30, on évite ainsi le cheminement en surface du champ électrique et les amorçages diélectriques. De plus, pour diminuer encore plus ces contraintes diélectriques et mieux uniformiser les champs électriques en surface au niveau de la barre 30, le système de raccordement 10 comporte en option un second déflecteur diélectrique 23 qui entoure au moins partiellement la seconde vis de raccordement 21 et le second manchon 15 au niveau du second point de raccordement 25, en s'appuyant contre la barre conductrice 30.

On peut aussi envisager que le second point de raccordement 25 corresponde seulement à la connexion de deux segments de la barre conductrice 30 à relier ensemble, sans qu'il y ait un appareil interrupteur à raccorder à ce point. Dans ce cas, la seconde vis de raccordement 21 traverse une ouverture traversante 31 dans les deux segments et est maintenue fixée contre ces segments grâce à un écrou vissé à la vis 21.

La méthode pour mettre en place le système de raccordement 10 entre le transformateur de tension 40 et la barre conductrice 30 dans la cellule peut être la suivante :
- Insertion de la seconde vis de raccordement 21 dans une ouverture traversante 31 de la barre conductrice 30, après enfilage de l'éventuel second déflecteur diélectrique 23 dans la vis 21, et vissage de la vis 21 dans l'appareil électrique 39, permettant ainsi de serrer la barre 30 contre l'appareil électrique 39. La vis 21 peut par exemple comporter une empreinte de type six pans creux ou de type Torx pour effectuer un serrage selon un couple de serrage prédéterminé afin d'assurer une bonne connexion du circuit puissance haute tension.
- Vissage de la première vis de raccordement 20 dans le connecteur interne 41 du transformateur de tension 40, après enfilage de l'éventuel premier déflecteur diélectrique 22 et de l'entretoise 18 dans la vis 20. Comme pour la vis 21, la vis 20 peut par exemple comporter une empreinte de type six pans creux ou de type Torx pour appliquer un couple de serrage prédéterminé assurant une bonne connexion avec le connecteur interne 41 du transformateur de tension 40.
- Vissage du second manchon 15 à la seconde vis de raccordement 21 et introduction de l'extrémité 13 du conducteur rigide 11 dans le second manchon 15.
- Introduction de l'extrémité 12 du conducteur rigide 11 dans le premier manchon 14 et mise en regard du manchon 14 en face de la première vis 20.
- Coulissement (vers le haut) du manchon 14 pour effectuer son vissage à la vis 20.
- Pour aider à effectuer leur serrage et l'ajustement de leur position par rapport à la tête des vis 20 et 21, les manchons 14 et 15 peuvent comporter deux trous transversaux (autres que ceux des vis pointeau) permettant de les faire tourner avec un outil autour des vis 20, 21.
- Serrage des extrémités 12, respectivement 13, du conducteur rigide 11 à l'aide des vis pointeau transverses des manchons 14, respectivement 15.

Dans le cadre de l'invention, on peut envisager une solution simplifiée qui ne possède des moyens de réglage et d'ajustement de la position du système de raccordement 10 qu'à une seule extrémité du conducteur de dérivation 11. Dans cette solution, un seul manchon métallique, de préférence le premier manchon 14, est capable d'ajuster la position du système de raccordement 10 par rapport à la première vis de raccordement 20.

## Revendications

1. Système de raccordement électrique (10) pour raccorder un transformateur de tension (40) avec une barre conductrice (30) haute tension, le système comportant un conducteur de dérivation (11) destiné à connecter un premier point de raccordement (24) au niveau du transformateur de tension (40) avec un second point de raccordement (25) au niveau de la barre conductrice (30), le transformateur de tension (40) comportant un connecteur interne (41) s'étendant selon un axe interne (X) perpendiculaire à un plan de surface (P) du transformateur de tension (40), **caractérisé en ce que** le système de raccordement (10) comprend :
- une première vis de raccordement (20) qui est destinée à être fixée au premier point de raccordement (24) dans le prolongement de l'axe interne (X) et qui est reliée au conducteur de dérivation (11),
- un premier manchon (14) métallique fileté qui relie le conducteur de dérivation (11) à la première vis de raccordement (20) selon l'axe interne (X) et qui permet d'ajuster la position du conducteur de dérivation (11) par rapport à la première vis de raccordement (20),
- une seconde vis de raccordement (21) qui est destinée à être fixée au second point de raccordement (25) perpendiculairement à la barre conductrice (30).

2. Système de raccordement électrique selon la revendication 1, **caractérisé en ce qu'**il comprend un second manchon (15) métallique fileté reliant le conducteur de dérivation (11) à la seconde vis de raccordement (21) et permettant d'ajuster la position du conducteur de dérivation (11) par rapport à la seconde vis de raccordement (21).

3. Système de raccordement électrique selon la revendication 1, **caractérisé en ce qu'**il comporte également un premier déflecteur diélectrique (22) entourant la première vis de raccordement (20) et un second déflecteur diélectrique (23) entourant la seconde vis de raccordement (21).

4. Système de raccordement électrique selon la revendication 1, **caractérisé en ce que** le conducteur de dérivation comporte une ou plusieurs courbures entre le premier manchon (14) et le second manchon (15).

5. Système de raccordement électrique selon la revendication 1, **caractérisé en ce que** le conducteur de dérivation (11) est recouvert d'un isolant (19).

6. Cellule d'appareillage électrique comprenant un transformateur de tension (40), au moins une barre conductrice (30) haute tension, et un système de raccordement électrique (10) selon la revendication 1.

7. Cellule d'appareillage électrique selon la revendication 6, **caractérisée en ce que** le système de raccordement (10) comprend un second manchon (15) métallique fileté reliant le conducteur de dérivation (11) à la seconde vis de raccordement (21) et permettant d'ajuster la position du conducteur de dérivation (11) par rapport à la seconde vis de raccordement (21)

8. Cellule d'appareillage électrique selon la revendication 6 ou 7, comportant également un appareil électrique interrupteur (39) qui est raccordé à la barre conductrice (30), **caractérisée en ce que** la seconde vis de raccordement (21) traverse une ouverture (31) de la barre conductrice (30) et est vissée dans l'appareil électrique interrupteur (39).

9. Cellule d'appareillage électrique selon la revendication 6, **caractérisée en ce qu'**elle comporte également un premier déflecteur diélectrique (22) entourant la première vis de raccordement (20) et un second déflecteur diélectrique (23) entourant la seconde vis de raccordement (21).

10. Cellule d'appareillage électrique selon l'une des revendications 6 à 9, **caractérisée en ce qu'**elle comporte un premier système de raccordement (10) pour raccorder une première borne du transformateur de tension (40) avec une première barre conductrice (30A) et un deuxième système de raccordement (10') similaire pour raccorder une deuxième borne du transformateur de tension avec une deuxième barre conductrice (30B).

## Patentansprüche

1. Elektrisches Verbindungssystem (10) zum Verbinden eines Spannungswandlers (40) mit einer Hochspannungssammelschiene (30), wobei das System einen Abzweigleiter (11) zum Verbinden eines ersten Verbindungspunktes (24) auf der Ebene des Spannungswandlers (40) mit einem zweiten Verbindungspunkt (25) auf der Ebene der Sammelschiene (30) aufweist, wobei der Spannungswandler (40) einen internen Verbinder (41) aufweist, der sich entlang einer senkrecht zu einer Oberflächenebene (P) des Spannungswandlers (40) verlaufenden Innenachse (X) erstreckt, **dadurch gekennzeichnet, dass** das Verbindungssystem (10) Folgendes aufweist:
- eine erste Verbindungsschraube (20), die dazu bestimmt ist, an dem ersten Verbindungspunkt (24) in der Verlängerung der Innenachse (X) befestigt zu werden, und die mit dem Abzweigleiter (11) verbunden ist,
- eine erste metallische Gewindehülse (14), die den Abzweigleiter (11) mit der ersten Verbindungsschraube (20) entlang der Innenachse (X) verbindet und die es ermöglicht, die Position des Abzweigleiters (11) in Bezug auf die erste Verbindungsschraube (20) einzustellen,
- eine zweite Verbindungsschraube (21), die dazu bestimmt ist, am zweiten Verbindungspunkt (25) senkrecht zur Sammelschiene (30) befestigt zu werden.

2. Elektrisches Verbindungssystem nach Anspruch 1, **dadurch gekennzeichnet, dass** es eine zweite metallische Gewindehülse (15) aufweist, die den Abzweigleiter (11) mit der ersten Verbindungsschraube (21) verbindet und die es ermöglicht, die Position des Abzweigleiters (11) in Bezug auf die zweite Verbindungsschraube (21) einzustellen.

3. Elektrisches Verbindungssystem nach Anspruch 1, **dadurch gekennzeichnet, dass** es darüber hinaus einen ersten dielektrischen Deflektor (22) aufweist, der die erste Verbindungsschraube (20) umgibt, und einen zweiten dielektrischen Deflektor (23), der die zweite Verbindungsschraube (21) umgibt.

4. Elektrisches Verbindungssystem nach Anspruch 1, **dadurch gekennzeichnet, dass** der Abzweigleiter eine oder mehrere Krümmungen zwischen der ersten Hülse (14) und der zweiten Hülse (15) aufweist.

5. Elektrisches Verbindungssystem nach Anspruch 1, **dadurch gekennzeichnet, dass** der Abzweigleiter (11) mit einem Isolator (19) umhüllt ist.

6. Elektrische Schaltzelle, die einen Spannungswandler (40), mindestens eine Hochspannungssammelschiene (30) und ein elektrisches Verbindungssystem (10) nach Anspruch 1 aufweist.

7. Elektrische Schaltzelle nach Anspruch 6, **dadurch gekennzeichnet, dass** das Verbindungssystem (10) eine zweite metallische Gewindehülse (15) aufweist, die den Abzweigleiter (11) mit der ersten Verbindungsschraube (21) verbindet und die es ermöglicht, die Position des Abzweigleiters (11) in Bezug auf die zweite Verbindungsschraube (21) einzustellen.

8. Elektrische Schaltzelle nach Anspruch 6 oder 7, die darüber hinaus einen elektrischen Schalter (39) aufweist, der mit der Sammelschiene (30) verbunden ist, **dadurch gekennzeichnet, dass** die zweite Verbindungsschraube (21) durch eine Öffnung (31) der Sammelschiene (30) verläuft und in den elektrischen Schalter (39) eingeschraubt ist.

9. Elektrische Schaltzelle nach Anspruch 6, **dadurch gekennzeichnet, dass** sie darüber hinaus einen ersten dielektrischen Deflektor (22) aufweist, der die erste Verbindungsschraube (20) umgibt, und einen zweiten dielektrischen Deflektor (23), der die zweite Verbindungsschraube (21) umgibt.

10. Elektrische Schaltzelle nach einem der Ansprüche 6 bis 9, **dadurch gekennzeichnet, dass** sie ein erstes Verbindungssystem (10) zum Verbinden einer ersten Klemme des Spannungswandlers (40) mit einer ersten Sammelschiene (30A) aufweist und ein ähnliches zweites Verbindungssystem (10') zum Verbinden einer zweiten Klemme des Spannungswandlers mit einer zweiten Sammelschiene (30B).

## Claims

1. Electrical connection system (10) for connecting a voltage transformer (40) with a high-voltage conductive bar (30), the system comprising a shunt conductor (11) intended to connect a first connection point (24) at the voltage transformer (40) with a second connection point (25) at the conductive bar (30), the voltage transformer (40) comprising an internal connector (41) extending along an internal axis (X) perpendicular to a surface plane (P) of the voltage transformer (40), **characterized in that** the connection system (10) comprises:
- a first connection screw (20) which is intended to be fixed to the first connection point (24) in the extension of the internal axis (X) and which is linked to the shunt conductor (11),
- a first threaded metal sleeve (14) which links the shunt conductor (11) to the first connection screw (20) along the internal axis (X) and which makes it possible to adjust the position of the shunt conductor (11) relative to the first connection screw (20),
- a second connection screw (21) which is intended to be fixed to the second connection point (25) perpendicular to the conductive bar (30).

2. Electrical connection system according to Claim 1, **characterized in that** it comprises a second threaded metal sleeve (15) linking the shunt conductor (11) to the second connection screw (21) and making it possible to adjust the position of the shunt conductor (11) relative to the second connection screw (21).

3. Electrical connection system according to Claim 1, **characterized in that** it also comprises a first dielectric deflector (22) surrounding the first connection screw (20) and a second dielectric deflector (23) surrounding the second connection screw (21).

4. Electrical connection system according to Claim 1, **characterized in that** the shunt conductor comprises one or more bends between the first sleeve (14) and the second sleeve (15).

5. Electrical connection system according to Claim 1, **characterized in that** the shunt conductor (11) is covered with an insulation (19).

6. Electrical switchgear cell comprising a voltage transformer (40), at least one high-voltage conductive bar (30), and an electrical connection system (10) according to Claim 1.

7. Electrical switchgear cell according to Claim 6, **characterized in that** the connection system (10) comprises a second threaded metal sleeve (15) linking the shunt conductor (11) to the second connection screw (21) and making it possible to adjust the position of the shunt conductor (11) relative to the second connection screw (21).

8. Electrical switchgear cell according to Claim 6 or 7, also comprising an electrical switch device (39) which is connected to the conductive bar (30), **characterized in that** the second connection screw (21) passes through an opening (31) of the conductive bar (30) and is screwed into the electrical switch device (39).

9. Electrical switchgear cell according to Claim 6, **characterized in that** it also comprises a first dielectric deflector (22) surrounding the first connection screw (20) and a second dielectric deflector (23) surrounding the second connection screw (21).

10. Electrical switchgear cell according to one of Claims 6 to 9, **characterized in that** it comprises a first connection system (10) for connecting a first terminal of the voltage transformer (40) with a first conductive bar (30A) and a second, similar connection system (10') for connecting a second terminal of the voltage transformer with a second conductive bar (30B).
